# EUROPEAN PATENT APPLICATION

(11) **EP 4 492 121 A1**
(43) Date of publication of application: **15.01.2025**
(21) Application number: 24181585.1
(22) Date of filing: 12.06.2024
(51) Int. Cl.: G02B 23/24, B25J 9/06, B25J 18/06

(54) **INSPECTION SYSTEM**

(30) Priority: 12.07.2023 GB 202310685
(71) Applicant: Rolls-Royce plc, London N1 9FX (GB)
(72) Inventor: Norton, Andrew D, Derby, DE24 8BJ (GB); Wallace, Alexander R, Derby, DE24 8BJ (GB); Harrison, Liam D, Derby, DE24 8BJ (GB)
(74) Representative: Rolls-Royce plc

(57) **Abstract**

A system for inspecting a complex component, the system comprising: a flexible inspection device having a driver for controlling the motion of the flexible inspection device by manipulating the relative positions of a plurality of joints within the device, the flexible device having a sensor on its distal end; a feed mechanism for controlling the insertion or retraction of the flexible device into or from the complex component; a component driver for driving the movement of an aspect of the complex component from at least a first position to a second position; and a computer running a computer program, the computer interfacing with the flexible inspection device, the feed mechanism, and the component driver, so as to link the operation of the flexible inspection device, the feed mechanism and the component driver through a single program.

## Description

### FIELD

The present invention relates to a system and a method for inspecting a complex component, e.g. a component that has moveable parts.

### BACKGROUND

Repair and inspection of complex objects such as gas turbine engines, nuclear power plants, underground cabling, pipes and equipment for oil and gas processing is of growing importance as these industries grow. In these examples there are issues with the ease of access to perform repairs, maintain and inspect these systems; this is either because of confined access, dangerous environments or the complexities and cost in removing the equipment for repair and processing. To overcome these limitations there has been growing interest in robotic tools and probes that are able to work within these confined and difficult environments. Examples of such systems are borescopes and continuum or compliant robots.

The use of robotics, however, is limited as they require skilled operators to control them and to feel and feed them into the component. In addition, often there are components to be moved within the equipment, so that a full inspection can take place. An example of this is in the inspection of a compressor section of a gas turbine engine where the robot has to be fed into the engine through an inspection port and then the compressor blade has to be rotated by a separate tool that is not linked to the inspection system, so that a full imaging of the component can be achieved. In addition to the physical process of feeding the robot into the correct position for inspection, there is also a processing element which requires the operator to register each blades so that they can be identified and labelled. In such a case the compressor blade is controlled separately to the robot and consequently requires extra equipment and operators. In addition to this the lack of communication between the two systems reduces the repeatability of the process, and as such results in each scan being time consuming and individual. This lack of comparable data can make damage or aging assessments more difficult to perform. Consequently, it would be desirable to create an automated system to feed the robot into the workspace and to control the component being inspected.

### SUMMARY

The invention provides a system and a method as set out in the appended claims.

In a first aspect there is provided a system for inspecting a complex component, the system comprising: a flexible inspection device having a driver for controlling the motion of the flexible inspection device by manipulating the relative positions of a plurality of joints within the device, the flexible inspection device having a camera on its distal end; a feed mechanism for controlling the insertion or retraction of the flexible inspection device into or from the complex component; a component driver for driving the movement of an aspect of the complex component from at least a first position to a second position; and a computer interfacing with the flexible inspection device, the feed mechanism, and the component driver, so as to link the operation of the flexible inspection device, the feed mechanism and the component driver through a single program.

The feed mechanism may be both able to provide linear and/or rotational motion to at least a portion of the flexible inspection device.

The program may be connected to an artificial intelligence engine, such that the artificial intelligence engine may be used to assist with the insertion of the robot into the complex component using the feed mechanism, wherein the program is taught through learning from the insertion form human operators how to navigate through a known set of passages to reach the desired location, so that it is able to automatically move and position the robot into the first imaging position.

The program may be connected to an artificial intelligence engine, artificial intelligence for imaging of the component, wherein the system is taught to recognise the correct its positioning or orientation of the camera relative to the aspect of the complex component and using this to provide feedback from the camera image to the system which is then able to determine positional and orientational corrections to apply to the flexible imaging system and/or the aspect of the complex component which are transmitted to the component driver and to the feed mechanism and driver.

The component driver may be a motor for driving a drive shaft or gearbox.

The component driver may be used to rotate an aspect of the complex component to a specific pre-determined position to enable examination with the flexible inspection device.

The camera feed output may be fed into the computer program such that the recognition of surrounding features is used to determine at least the first position of the flexible inspection device with respect to an aspect of the complex component.

The computer program may be used to control the movement of the component driver and the flexible inspection device to enable a set of inspection tasks in the complex environment to be completed.

The flexible inspection device may be provided with a tool at its distal end, the tool being able to interface with the aspect of the complex component.

The computer program may be configured to automatically control the insertion and extraction of the flexible inspection device into the complex component, the computer program providing instructions to the feed mechanism regarding the amount of flexible inspection device that is to be inserted and/or extracted, and interfacing with the flexible inspection device driver to control the position of the distal end of the inspection device.

The feed mechanism may be provided with force or pressure sensors that record the force that is related to the insertion and or extraction, as well as any possible twist mechanism, that is applied to the flexible inspection device. The forces may be recorded and transmitted to a feed mechanism controller which is able to represent these forces as haptic feedback through the controller.

The computer program may be instructed to take at least one image of the aspect of the complex component the first position, and then to take at least one image when the aspect of the complex component is its second and possibly any further positions.

The feed mechanism may be provided with a sensor to determine the position of the flexible inspection device within the feed mechanism and to determine the amount of flexible inspection device that has passed through the feed mechanism relative to a home position.

The feed mechanism may be provided with a twist sensor, which is able to determine the amount of twist that has been applied to the flexible inspection device by the feed mechanism.

The system may be connected to a deadman's switch.

In a second aspect there is provided a method for inspecting a complex component using a system as discussed in relation to the first aspect, wherein the method comprises: inserting a flexible inspection device into a feed mechanism, driving the flexible inspection device into a first inspection position, imaging the aspect of the complex component in the first position, using the component driver to move the aspect of the complex component from a first position to a second position, imaging the aspect of the complex component in the second position, extracting the flexible inspection device from the first position, and removing the flexible inspection device from the feed mechanism.

The component driver may be used to rotate an aspect of the component from a first position to a specific angular second position to enable examination with the flexible inspection device.

The feed mechanism may be connected to the complex component prior to the insertion of the flexible inspection device.

The feed mechanism may be connected to the complex component after the insertion of the flexible inspection device.

After imaging the complex component in at least the first and second positions the flexible inspection device may be driven to a second imaging position and an image is captured of the aspect of the complex component in the first position, the component driver moves the aspect of the complex component from at least the first to the second position and images are recorded in at least the second position.

Once the flexible inspection device is inserted into the feed mechanism the flexible inspection device may be automatically moved into a home position.

The step of driving the flexible inspection device into the first or second position the operator bay be capable of manoeuvring the distal end of the flexible inspection device into position.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
FIG. 1 presents an example of the equipment required for a complex inspection of a complex component;
FIG. 2 presents a detailed example of a feed mechanism having both linear and rotational/twist feed;
FIG. 3 presents a rear perspective view of the feed mechanism;
FIG. 4 presents a cross sectional view along the longitudinal axis of an alternative feed mechanism;
FIG. 5 presents an example workflow chart of the inspection/repair system; and
FIG. 6 presents another example workflow of an inspection process of the system.

### DETAILED DESCRIPTION

Aspects and embodiments of the present invention will now be discussed with reference to the accompanying figures. Further aspects and embodiments will be apparent to those skilled in the art.

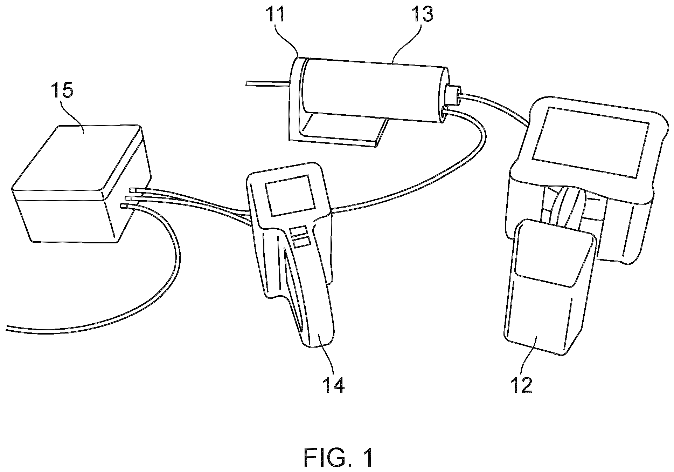

FIG. 1 presents an example of the equipment required for a complex inspection of a complex component. A complex component is a component that is made up of a plurality of parts and wherein at least one of these parts or aspects is moveable relative to the remainder. In this a flexible inspection device 11 is used to hold or support the camera and possibly the illumination system for the camera. It will be understood that the term flexible inspection device incorporates compliant, hyper-redundant, continuum robot or borescope systems. The camera system comprises an objective lens and a camera section used to capture the image. The objective lens may be coupled to an optical fibre system to transmit the captured image to the sensor in the camera system. The output from this can be processed and sent to a visual display unit. Alternatively, the tip may comprise a small camera system with an objective lens and compact sensor mounted on the tip of the flexible inspection device. In such cases a hard relay may be used to transmit the camera image from the camera to a visual display unit. The objective lens on the end of the flexible inspection device may be moveable, so that it can change the focal length of the camera. The flexible inspection device may comprise a passive section and an active section. The flexible inspection device may be couped to an actuator pack 12 that controls the tendons that pass through the body of the flexible inspection device or the robot. These actuator packs may be of any suitable design and functionality as would be apparent to a person skilled in the art. In the example shown in FIG. 1 the actuator pack is borescope controller. The actuator is provided with the signals from the operator or program that is controlling the flexible inspection device. This actuator is coupled to a control computer (not shown). The tendons are used to set the tension within the joints that are used to manipulate the shape of the active part of the flexible inspection device. The flexible inspection device may have a single degree of freedom or may have multiple degrees of freedom. The increase in the degrees of freedom may be achieved by offsetting the movement axis of any joints relative to the joints on neighbouring sections. Consequently, the actuator pack may be used to control any suitable number of tendons. As the flexible inspection device is fed into the complex component the passive section is used to provide a bridge between the actuator and the active section and to allow the tendons, fibres and relays to pass through in order to protect them. The active and passive sections may have an outer skin positioned around them to protect itself and the component being inspected. A feed mechanism 13 is shown being connected to a handheld controller 14 and to a feed mechanism controller 15. The feed mechanism controller contains all of the electronic drive motors to drive and control the motion of the feed mechanism. The feed mechanism is used to provide movement of the flexible inspection device in a plane of the insertion point of the flexible inspection device. The feed mechanism may also provide a twist or rotation to the flexible inspection device as it passes through the feed mechanism. The feed mechanism could be part of a borescope or could be an electrically operable spool onto which the flexible inspection device is attached, alternatively it may be a more complex device as would be apparent to the skilled person. Although FIG. 1 shows the presence of the handheld controller any input device may be used. Furthermore, it is not necessary for the system to utilise an input device and any input signals may be provided via a computer program. If an input device is used its purpose is to allow the operator to provide instructions as to the forward drive of the flexible inspection device or flexible inspection device through the feed mechanism; this can provide a forward/reverse signal. In cases in which the feed mechanism is provided with a twist mechanism the input device may also provide a twist signal. The signals can be provided by the operator through the manipulation of at least one joystick or wheel controller. Also, not shown in FIG. 1 the system is coupled to a component driver. The component driver is used to control the motion or movement of a moveable component to be inspected within the complex component. For example, this may be a blade driver that connects to the gearbox of a gas turbine engine; this system provides drive to the gearbox which drives the compressor or turbine blades around so that they can be imaged. Other component driver systems may be other blade driver systems that connect to the blades or the drive shaft themselves. Alternatively, it could be a further robotic system this either being a further continuum or hyper-redundant robot or a multi-axis movement.

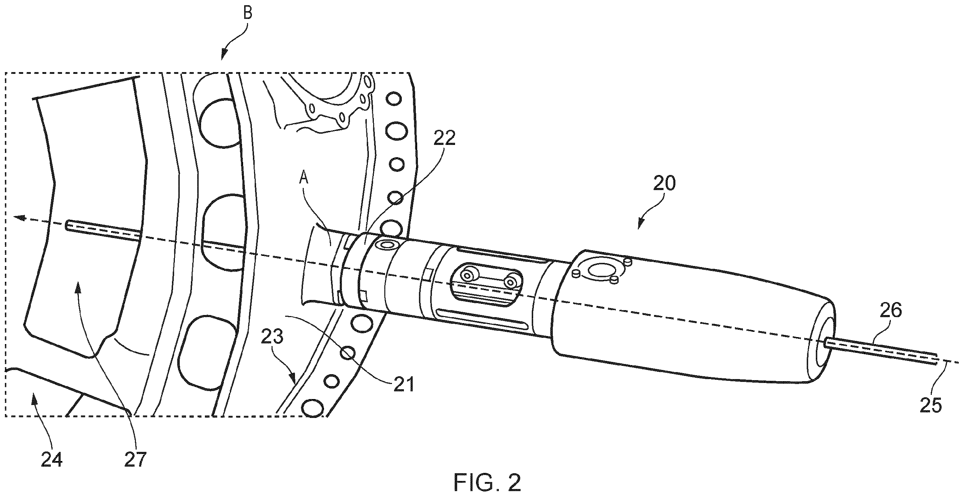

The flexible inspection device can be fed into the access port and pass through the passageways within the complex component using a feed mechanism. FIG. 2 presents a detailed example of a feed mechanism having both linear and rotational/twist feed without a housing. The figure shows a feed mechanism 20 for a flexible inspection device 22 that is mounted, in the figure, to the casing of a gas turbine engine 21. In particular, the feed mechanism is connected to an inspection port 23, which is positioned within the external wall of a nozzle guide vane section 24 of the intermediate pressure compressor. The feed mechanism is connected via screwing into a flange of a threaded portion of the inspection port. A passageway extends through the feed mechanism along its longitudinal axis 25, in the direction indicated. The passageway of the feed mechanism is coaxially aligned with the inspection port 23. Thus, in use, the longitudinal axis of the passageway is coaxially aligned with an aperture A of a body B. Accordingly, the attachment means is configured to coaxially align the longitudinal axis with the aperture A of the body B.

A flexible inspection device 22 is presented extending along the longitudinal axis of the feed mechanism passageway. The flexible inspection device can be fed into the passageway of the feed mechanism, and from there through the inspection port and into the gas turbine engine. Thus, in use, when the flexible inspection device 22 is inserted into the feed mechanism the flexible inspection device is coaxially aligned with the longitudinal axis 25 of the passageway and an aperture A of a body B. The distal end of the flexible inspection device 27 is shown in its deployed state within the feed mechanism so that it can be fed into an area of interest within the gas turbine engine as shown. The flexible inspection device may be actuatable; this means that it is capable of controlled movement relative to the remainder of the elongate body; this would be the case with a flexible inspection device probe or a compliant robot.

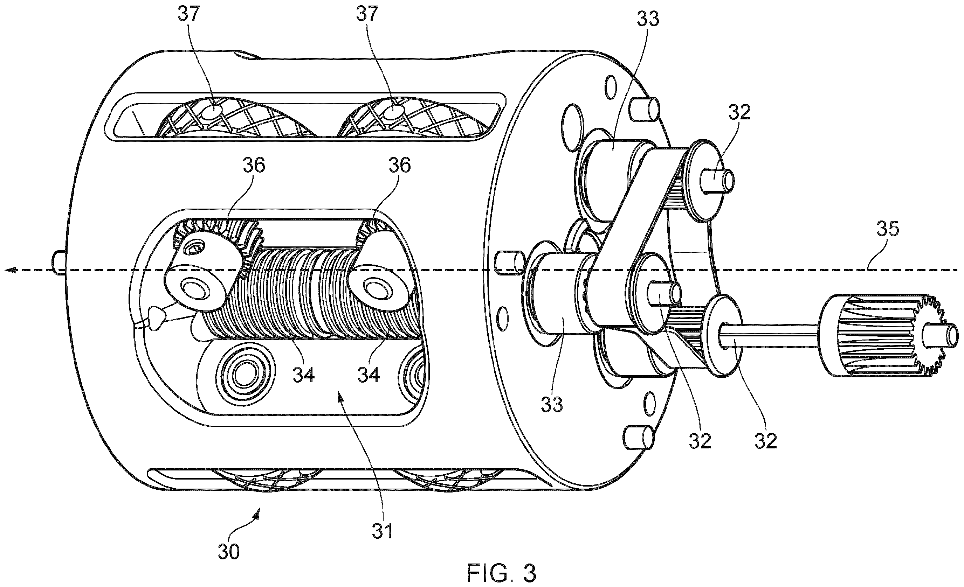

FIG. 3 presents a rear perspective view of the feed mechanism 30. The feed portion comprises a feed actuator 31, which is configured in use, to engage with and to drive the flexible inspection device along the longitudinal axis 35 of the feed mechanism. The feed mechanism, therefore, is configured to drive the flexible inspection device through the feed mechanism and into the desired workspace, which in the case of FIG. 2 was the intermediate compressor of a gas turbine engine. The feed portion comprises one or more feed portions. The feed portions are configured about the passageway that runs through the feed mechanism and is configured to engage with and drive the flexible inspection device along the passageway. In the example shown the feed actuator comprises three axial feed shafts 32. Each feed shaft is configured about the passageway such that the shafts 32 extend along axes which are parallel to, but radially offset from the longitudinal axis. This radial offset is fixed so that the device is configured so that only a fixed size flexible inspection device can be driven through the feed mechanism. The feed actuator shown comprises three axial shafts. Each feed shaft is configured within roller bearings 33 at either side of the respective shaft and comprises worm gears 34. Each worm gear moves a respective worm wheel 36, wherein the worm wheels are mounted on a worm wheel shaft. The worm wheels are mounted to the worm wheel shaft via a wheel and are supported by two roller bearings. Each of the worm wheels drives a drive wheel. A tangent of each drive wheel at the point of engagement with the flexible inspection device extends parallel to but radially offset to the longitudinal axis. The offset is fixed to the radius of the flexible inspection device. In use the wheels grip the flexible inspection device and rotate in order to drive the flexible inspection device along the longitudinal axis. One of the difficulties with the use of such a system is that it can only be used on a fixed diameter robot. Therefore, if a different diameter robot or probe is required, to perform the desired task, the system requires a separate mechanism to feed the flexible inspection device into the area of interest.

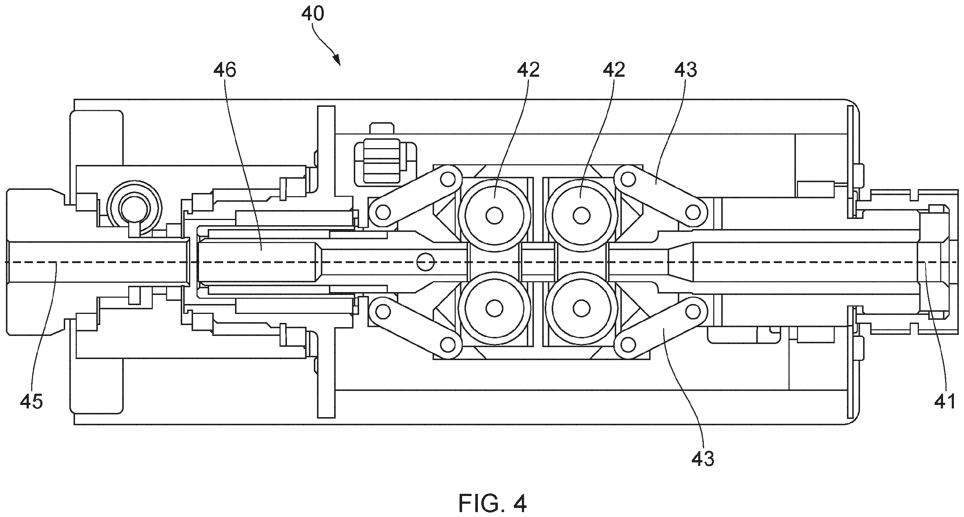

FIG. 4 presents a cross sectional view along the longitudinal axis of an alternative feed mechanism. The feed mechanism 40 comprises a flexible inspection device that extends along a longitudinal axis. A passageway is formed with the flexible inspection device, with its centre being along the longitudinal axis. The flexible inspection device is driven by a plurality of drive wheels 42 that are used to engage with pressure against the flexible inspection device, so as to add friction to the cable so that it can be moved along the longitudinal axis. The wheels are driven via a worm gear having a spur reduction. The wheels may be coated with polyurethane, or natural or artificial rubber to provide extra grip. The wheels may be mounted in pairs as shown. The wheels are mounted to a frame that is connected pivotally via a pair of linkage bars 43 to a pair of springs that are aligned to the longitudinal axis. The frame extends longitudinally along part of the length of the feed mechanism. The spring 44 extends along the axis of the central passageway and has a set tension. The tension is set so that the wheels on the carriage are configured to contact the outside of the flexible inspection device when it is set to the smallest diameter of flexible inspection device to be used. Due to the spring tension the wheels are forced down against the flexible inspection device; this along with the coating helps to maintain frictional contact with the flexible inspection device. When a flexible inspection device of a larger diameter is used the flexible inspection device pushes against the wheels and forces the wheels upwards and stretches the springs. A screw may be employed to provide a means of adjusting the tension of the spring. The presence of the screw adjusts the length of the spring relative to a fixed end. Alternatively, the tension on the springs may be preloaded. A tensioning knob 45 may be used to adjust the screw length which can adjust the length and thus the tension within the springs. The advantage of this configurations is that the pivotable linkages are able to change their angle so that the radial spacing between the wheels and the longitudinal axis is increased. This allows the feed mechanism to take larger diameter flexible inspection devices. There may be a single pair of mounted wheels, so that only one side of the feed mechanism expands in the radial direction. However, to allow for a centred feed about the feed mechanism, two or more pairs of wheels may be mounted in pairs and connected to the springs. Such a configuration also increases the friction that acts between the wheels and the flexible inspection device. The wheels may be mounted to a carriage. The mounting can be coupled to the linkage pins, so that the wheels move together. The mounting may extend around the wheels and connect to bearings with the wheel axis running through them. There may be four pairs of drive wheels each mounted perpendicular about the longitudinal axis, or alternatively there may be 3 drive wheels orientated at 120° about the longitudinal axis.

About the longitudinal axis 41 there is a removeable feed core. The feed core comprises a central tube 46 that allows for easy feed of the flexible inspection device. There is a plurality of cut away sections of the feed core that allow axis for the drive wheels, as discussed above, to extend into the feed core. The cut away sections are so sized to allow the drive wheels to move deeper towards the longitudinal axis within the core; this allows the wheels to move relative to the size of the flexible inspection device that is being used. The feed core is shown having a taper; this makes the feeding of the flexible inspection device easier as it can be fed into the rear of the feed core. The feed core may be interchangeable to allow for the use of different diameter flexible inspection devices to be used. The size of the core and the offset of the drive wheels being such that only a range of diameters of flexible inspection devices can be used. If a smaller or larger dimeter is needed the feed core can be changed. The drive mechanism may be coupled to an encoder, so that it is possible to detect any slip in the drive of the flexible inspection device. Any slip, if undetected, could potentially result in an incorrect determination of the amount of flexible inspection device that has been inserted into the workspace, which could potentially result in damage of the tool, probe or the flexible inspection device itself. A light gate may also be used to detect a position of the flexible inspection device within the feed mechanism, so that the position and orientation of the flexible inspection device can be accurately determined.

FIG. 4 also presents the twist mechanism 42 which is positioned at the end of the feed mechanism. The feed mechanism is configured to be at the distal end. That is to say the end that is closest to the equipment/workspace into which the flexible inspection device is to be inserted. The twist mechanism comprises a gripping mechanism that is able to rotate the flexible inspection device about the longitudinal axis. The twist mechanism comprises a worm drive that allows the end section to rotate within the feed mechanism. All of these features are held within a housing to which the fixed position structural features can be affixed.

In use the flexible inspection device is fed into the feed core of the feed mechanism and inserted until it connects with the drive wheels. The tension of the drive spring is reduced prior to insertion to allow for easy motion of the wheels. Depending upon the accuracy and the size range of the different flexible inspection devices being used the tension of the spring may not need to be changed manually. In cases where there is only a small difference the tension can be set for the smallest diameter of the flexible inspection device and when a larger diameter flexible inspection device is inserted the member acts against the wheels and increases the tension on the springs. Once the flexible inspection device is fed through the drive mechanism it passes into the twist mechanism. Once the system is in this position the feed mechanism is ready and it can be coupled to the area for deployment if it has not already been positioned there already and the system can be deployed. In this position the flexible inspection device of any size can be fed into the work area and the twisted to the desired position within the work area.

The feed mechanism may be connected to a controller that has the electronic equipment required for controlling the feed mechanism. The controller may contain a pair of motor drives, a pair of load cell amplifiers, a pair of MCU's and a pair of PCB's that distribute power and communications between these devices and connected components such as the motors, encoders, load cells. The controller there may also house a node/power supply with its power related components such as AC/DC converters, fuses etc. A computer can also be used to connect external control systems or carry out more complex control tasks. The controller in the handset may contain a single board custom PCB. The PCB is connected a pair of resistive haptic feedback scroll wheels, a screen 2, multi-function buttons, a dead man's switch and a vibration motor.

All of the components within the system are coupled to a central computer system. The central computer system can be provided for any suitable computer system. The computer must be able to interface with the feed mechanism controller, the actuator pack or driver for controlling the flexible inspection device and the component driver. The computer runs a program that is able to send instructions to each of these components based upon signals so that the system of components can be controlled relative to each other to provide an automated inspection and/or repair process using the system. The computer must be equipped with a suitable means of interfacing with the each of these components; this may be using wired or wireless communication systems or a combination. Examples of wired connections may include via a fibre optical cable such as ethernet or via electrical cables such as Universal Serial Bus. Examples of wireless communication protocols may include Bluetooth, WiFi, 4G or further generations. The computer could be a Programmable logic controller, Computer-on-module, Mobile computer, Personal Computer, or otherwise.

In operation, the computer program controls the insertion of the flexible inspection device into the desired environment through the use of the feed mechanism. The signal provides a forwards or backwards signal which is then input by the system. It can also provide a signal regarding the amount of twist that is required to the system if a twist mechanism is present. The twist allows for improved positioning of the robot as it is moved through the workspace. The operator is able to control the movement of the flexible inspection device separately if needed through the insertion to ensure that the robot is positioned in the correct location. Additionally, or alternatively the program may be able to control the movement of the flexible inspection device as it passes through the workspace. This may be that the flexible inspection device follows a predetermined path that allows it to follow a fixed path to arrive at the target location. Additionally or alternatively, the control of the robot may be based on detection of optical markers or known reference features that are positioned about the workspace, so that the system can accurately determine its position. With the position being accurately determined it may either follow a predetermined series of movements or it may be able to determine its position relative to a design path and derive form that a desired path to take and how to manipulate the shapes in order to follow that path. Such a control system may be through a feedback system that is continuously inputting visual data into the control algorithm to calculate the required movement of the flexible inspection device as it passes through the space. The flexible inspection device is thus able to navigate into its desired position. Depending upon the nature of the component driver the operator can couple this to a component or if it is a robotic component driver the robot can be moved into position. With the flexible inspection device in position, and the component driver coupled to the desired part of the component the system can be used to perform the inspection and repair process as required. In this the camera on the flexible inspection device is operated to obtain images, whilst the component driver is used to move components within the flexible inspection devices field of vision such that an accurate determination of the position and the component can be obtained and the image can be accurately labelled by the systems such that it is known within the system and a repeat image could be obtained by repeating the process In setting up, the image may be compared against previously recorded images to correct the positioning The component driver may also be used to perform other tests or repairs or checks on the system. For example, this may be that it is used to link two inaccessible cables by connecting a socket whilst the flexible inspection device is used to observe the process to ensure that the process is done correctly. Alternatively, the flexible inspection device head may have a probe having a degree of functionality so that it could act as a contact probe to take measurements. For example, an eddy current measurement of a component could be taken and the signal recorded. Alternatively, a clamp meter maybe used on inaccessible cabling bundles to detect faults. The component driver could then move the system being inspected to a second position so that the component being inspected can be mapped with images and or physical measurements.

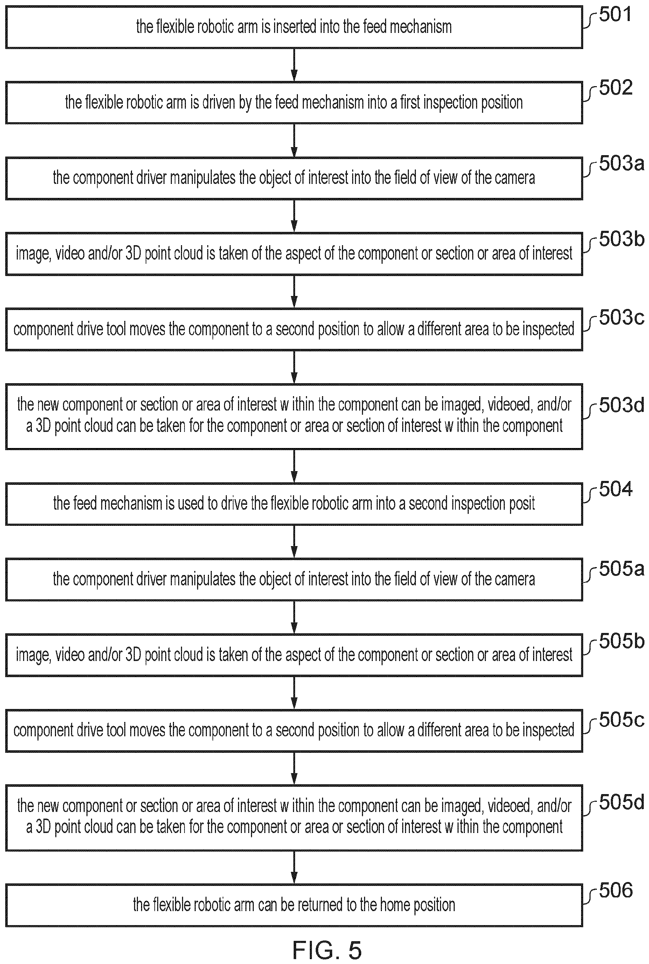

FIG. 5 presents an example workflow chart of the inspection/repair system. In step 501 the flexible inspection device is inserted into the feed mechanism. This means that the flexible inspection device is positioned within the driving wheels of the feed mechanism, such a position may be determined as a home position for the flexible inspection device. This can be done with the feed mechanism mounted in situ with respect to the component, or alternatively prior to the mounting, which can be done with the flexible inspection device in place. In step 502 the flexible inspection device is driven by the feed mechanism into a first inspection position within the complex component. The drive of the flexible inspection device or robotic arm can be both linear and rotational through the feed mechanism. This range of motion allows the flexible inspection device to be in the correct position and with the correct orientation with respect to an aspect of the complex component when it is in its first inspection position. In step 503a the component driver is used to manipulate the aspect of the complex component into the field of view of the camera on the flexible inspection device. This for example can be through linear or rotational movement of the aspect of the complex component. This motion should position the section or area of interest into focus for the camera. In step 503b an image, video and/or 3D point cloud is taken of the aspect of the complex component; this can be the full aspect, or a section or area of interest on the aspect of the component. The component driver may be configured to provide a micro and macroscale movements of the aspect of the complex component, so that it is able to move a section into view using the macro scale manipulation and then once in position the micro movement can be used to allow for small scale movements such that images may be taken at differing angles so that any differences can be observed or to allow for a more accurate 3D point cloud to be built without any blank areas which would be potentially hidden within shadows if used with a single point image. In step 503c the component driver moves the aspect of the complex component to a second position to allow a different area to be inspected. In step 503d the aspect of the complex component or section or area of interest thereof can be imaged, videoed, and/or a 3D point cloud can be taken for the component or area or section of interest within the component. Steps 503a-503d can then be repeated until the entire component or desired areas of the components are imaged. In step 504 the feed mechanism is used to drive the flexible inspection device into a second inspection position; this can involve a linear and/or rotational movement of the probe into a second inspection position. A second inspection position may allow for stereoscopic imaging to be achieved, to provide a change of angle relative to the aspect of the complex component or to provide an image of a different orientation or aspect of the complex component, area or section of interest. Once the flexible inspection device is in its second inspection position the imaging process can be run again. In step 505a the component drive tool is used to manipulate the object of interest into the field of view of the camera on the flexible inspection device or robotic arm. In step 505b an image, video and/or 3D point cloud is taken of the aspect of the complex component or a section or area of interest of the aspect of the complex component. In step 505c the component drive tool moves the aspect of the complex component to a second position to allow a different area to be inspected. In step 505d the new or section or area of interest of the aspect of the complex component can be imaged, videoed, and/or a 3D point cloud can be taken for the component or area or section of interest within the component. In step 506 the flexible inspection device can be returned to the home position. This step is done by retracting the flexible inspection device using the feed mechanism, which uses the drive wheels to pull the flexible inspection device back towards itself. Once the flexible inspection device is in the home position it may be removed from the feed mechanism. The feed mechanism can be removed from the complex component with or without the flexible inspection device in the home position. With the feed mechanism removed from the complex component any blocking caps can be replaced on the access port so that the complex component can be used again.

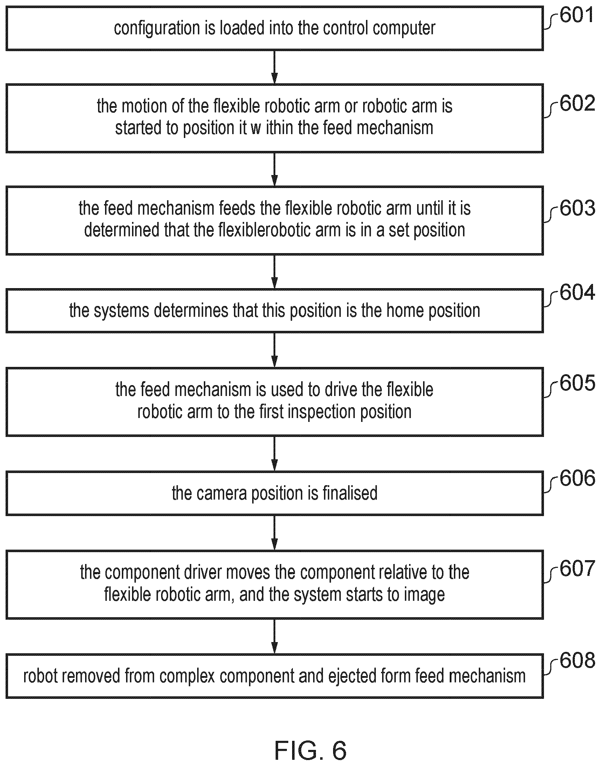

FIG. 6 presents another example workflow of an inspection process of the system. In step 601 a configuration is loaded into the control computer. The configuration provides all the instructions that the equipment needs to undergo in order to perform the desired inspection process. This includes instructions for the feed mechanism and the component driver. It may also provide instructions for the robot actuator pack or the borescope driver. The instructions for example may be how much of the flexible inspection device to insert into the complex component, so that it has a length great enough to reach the desired point for the first inspection position. With the program installed in the computer, the user is instructed to load the flexible inspection device into the feed mechanism. This means that the operator places the flexible inspection device into the feed mechanism. This can be done prior to the feed mechanism being connected to the complex component or after the feed mechanism has been positioned with respect to the complex component. In step 602 the motion of the flexible inspection device or robotic arm is started to position it within the feed mechanism. Before the motion may be started the user/operator may have to hold a deadman's switch. Such a switch is used so that the system can be stopped if any problems are encountered so that there is no damage to either the flexible inspection device or the complex component. Such a deadman's switch may be a pressure switch. In step 603 the feed mechanism feeds the flexible inspection device until it is determined that the flexible inspection device is in a set position. The system may determine if the flexible inspection device is in position by use of sensors and/or the presence of optical markers so that the system knows that the flexible inspection device is in a set position. In step 604 the systems determines that this position is the home position; this will be used as a reference point for the feeding and retracting of the flexible inspection device into the complex component, so that the exact amount of length insertion can be determined and also how much twist has been applied. The home position may have a pre-set twist, so that both the position and the rotational orientation of the flexible inspection device is known. In step 605 the feed mechanism is used to drive the flexible inspection device to the first inspection position. This may be executed by pressing a button or may be a progression of an automated process after the home position has been determined. The operator may be able to override the process at any stage in case of issues. In step 606 the camera position is finalised. The operator may also be able to control the final movement of the flexible inspection device to ensure that it is in the correct position This may be through instructions to the feed mechanism and/or to the actuator or the flexible inspection device driver. Or the system may have a closed loop control system that is able to position the end effector of the flexible inspection device relative to at least one sensor or optical marker. In step 607 the component driver moves the component relative to the flexible inspection device, and the system starts to image, video and or produce a 3D point cloud of the component or area of interest. As the component driver rotates the aspect of the complex component the camera system may be instructed when the camera is in position to take the images. Once a set of images have been obtained or a desired video has been produced the flexible inspection device may be moved to a second, or further, imaging position and the imaging process repeated. If the imaging has been completed the flexible inspection device is instructed to return to the home position. This instruction can be automatic once the imaging step is completed, or it may be done manually through an interface by the operator. The flexible inspection device is then pulled out of the workspace within the complex component. In step 608 the flexible inspection device is ejected from the feed mechanism. This may be automatic, or it may be instructed by an operator. The flexible inspection device or robotic arm may be ejected whilst the feed mechanism is connected to the complex component or once it has been removed.

The program may have an artificial intelligence engine connected to it. Such an engine may be used to assist with the insertion of the robot into the complex component using the feed mechanism. The program may be taught through learning from the insertion form human operators how to navigate through a known set of passages to reach the desired location, so that it is able to automatically move and position the robot into the first imaging position. This may be done by breaking it down to a series of waypoints that need to be reached. Alternatively, or additionally the artificial intelligence engine may be used in the imaging of the component. This may involve teaching the system to recognise the correct its positioning or orientation of the camera relative to the component is required to obtain the desired information. With this a control system could be used to provide feedback from the camera image to the system which then converts the positional orientation into instructions to the actuator or driver and to the feed mechanism to ensure that the camera system is in the desired position. In these cases, the information may be created or may be taught through the system learning from the operation of an operator controlling the system and directing it to a known waypoint and saving those instructions.

The entire system may be integrated, so that the images obtained from the flexible inspection device or the robotic arm are shown and saved on the control computer. This will limit the amount of equipment that is required to operate the system.

The feed mechanism may be provided with sensors to determine any forces that are acting on the flexible inspection device or robotic arm during the insertion process. These sensors may be pressure sensors or load cells or other suitable sensors. This may be used to provide a haptic system. The haptic system can provide the operator with signals that and feeling that are akin to the motion of the robot or flexible inspection device into the workspace, so that an operator can readily determine if there is an issue and if so, can override the automatic control to ensure that the complex component and the flexible inspection device or robotic arm are safe. Alternatively the readings from these sensors can be used to trigger an alarm to an operator if they exceed a threshold value. If a threshold is exceeded the system may be instructed to stop further movement and an alarm is signalled to the operator. The operator may then have to manually control the system to make the system safe, and the sensor values are below threshold before the system can be restarted.

## Claims

1. A system for inspecting a complex component, the system comprising:
a flexible inspection device having a driver for controlling the motion of the flexible inspection device by manipulating the relative positions of a plurality of joints within the device, the flexible device having a sensor on its distal end;
a feed mechanism for controlling the insertion or retraction of the flexible device into or from the complex component;
a component driver for driving the movement of an aspect of the complex component from at least a first position to a second position; and
a computer running a computer program, the computer interfacing with the flexible inspection device, the feed mechanism, and the component driver, so as to link the operation of the flexible inspection device, the feed mechanism and the component driver through a single program.

2. The system of claim 1, wherein the feed mechanism is both able to provide linear as well as rotational motion to at least a portion of the flexible inspection device.

3. The system of claim 1 or 2, wherein the component driver is one of a motor for driving a drive shaft or gearbox.

4. The system of any preceding claim, wherein the component driver is used to rotate an aspect of the component to a specific angular position to enable examination with the flexible inspection device.

5. The system of any preceding claim, wherein the program is connected to an artificial intelligence engine, such that the artificial intelligence engine may be used to assist with the insertion of the robot into the complex component using the feed mechanism, wherein the program is taught through learning from the insertion form human operators how to navigate through a known set of passages to reach the desired location, so that it is able to automatically move and position the robot into the first imaging position.

6. The system of any preceding claim, wherein the program is connected to an artificial intelligence engine, artificial intelligence for imaging of the component, wherein the system is taught to recognise the correct its positioning or orientation of the camera relative to the aspect of the complex component and using this to provide feedback from the camera image to the system which is then able to determine positional and orientational corrections to apply to the flexible imaging system and/or the aspect of the complex component which are transmitted to the component driver and to the feed mechanism and driver.

7. The system of any preceding claim, wherein the sensor on the tip of the flexible inspection device is a CCD or CMOS chip for visual or non-destructive evaluation of a component in the complex environment.

8. The system of any preceding claim, wherein the sensor feed output is fed into the computer program such that the recognition of surrounding features is used to determine at least the first position of the flexible inspection device with respect to an aspect of the complex component.

9. The system of any preceding claim, wherein a command provided by the computer program is used to control the movement of the component driver to enable a set of inspection tasks in the complex environment to be completed.

10. The system of any preceding claim, wherein the flexible inspection device is provided with a tool at its distal end, the tool being able to physically interface with the aspect of the complex component.

11. The system of any preceding claim, wherein the computer program is configured to automatically control the insertion and extraction of the flexible inspection device into the complex component, the computer program providing instructions to the feed mechanism regarding the amount of flexible inspection device that is to be inserted and/or extracted, and interfacing with the flexible inspection device driver to control the position of the distal end of the inspection device.

12. The system of any preceding claim, wherein the feed mechanism is provided with pressure sensors that record the force related to the insertion and or extraction, and any possible twist mechanism, the forces being recorded and transmitted to a feed mechanism controller which is able to represent these forces as haptic feedback through the controller.

13. A method for inspecting a complex component using a system of any preceding claim, wherein the method comprises the steps of:
inserting a flexible inspection device of the system of any preceding into a feed mechanism;
driving the flexible inspection device into a first inspection position;
imaging the aspect of the complex component in the first position;
using the component driver to move the aspect of the complex component from a first position to a second position; and
imaging the aspect of the complex component in the second position, extracting the flexible inspection device from the first position, and removing the flexible inspection device from the feed mechanism.

14. The method of claim 13, wherein the component driver is used to rotate an aspect of the component from a first position to a specific angular second position to enable examination with the flexible inspection device.

15. The method of claim 13, wherein:
after imaging the complex component in at least the first and second positions the flexible inspection device is driven to a second imaging position and an image is captured of the aspect of the complex component in the first position, the component driver moves the aspect of the complex component from at least the first to the second position and images are recorded in at least the second position;
once the flexible inspection device is inserted into the feed mechanism the flexible inspection device is automatically moved into a home position; and/or
the step of driving the flexible inspection device into the first or second position the operator is capable of manoeuvring the distal end of the flexible inspection device into position.
